# EUROPEAN PATENT APPLICATION

(11) **EP 2 391 106 A1**
(43) Date of publication of application: **30.11.2011**
(21) Application number: 11167382.8
(22) Date of filing: 25.05.2011
(51) Int. Cl.: H04M 3/46

(54) **Private branch exchange with hunt group**

(30) Priority: 28.05.2010 JP 2010122622
(71) Applicant: Funai Electric Co., Ltd., Daito-shi, Osaka 574-0013 (JP)
(72) Inventor: Imaguchi, Koji, Daito-shi Osaka 574-0013 (JP)
(74) Representative: Grünecker, Kinkeldey, Stockmair & Schwanhäusser

(57) **Abstract**

A private branch exchange includes a control portion (17) parallelly forwarding an incoming call on an outside line to a plurality of recipients simultaneously or sequentially through any one of a analogue, mobile or IP network (11,12,13) if the incoming call on the

## Description

### BACKGROUND OF THE INVENTION

### Field of the Invention

The present invention relates to a private branch exchange, and more particularly, it relates to a private branch exchange having a call forwarding function.

### Description of the Background Art

A private branch exchange having a call forwarding function is known in general, as disclosed in Japanese Patent No. 3781702, for example.

The aforementioned Japanese Patent No. 3781702 discloses a private branch exchange forwarding an incoming call on an outside line to a first recipient included in a plurality of previously registered recipients if the incoming call is not answered, then stopping the current call forwarding if the first recipient does not answer and substitutionally forwarding the incoming call to a second recipient. In other words, the private branch exchange described in the aforementioned Japanese Patent No. 3781702 is formed to successively forward the incoming call one by one to the previously registered plurality of recipients.

However, the private branch exchange described in the aforementioned Japanese Patent No. 3781702 successively forwards the incoming call on the outside line one by one to the plurality of recipients if the incoming call is not answered, and hence it may disadvantageously take so much time for successively forwarding the incoming call to the plurality of recipients that the time for finding the answerer is lengthened.

### SUMMARY OF THE INVENTION

The present invention has been proposed in order to solve the aforementioned problem, and an object of the present invention is to provide a private branch exchange capable of finding an answerer in a shorter time when an incoming call on an outside line is not answered.

A private branch exchange according to an aspect of the present invention includes a first telephone communication portion connected to a first telephone network, a second telephone communication portion connected to a second telephone network, a third telephone communication portion connected to a third telephone network and a control portion parallelly forwarding an incoming call on an outside line to a plurality of recipients through one or more of the first telephone communication, the second telephone communication portion and the third telephone communication portion if the incoming call on the outside line is not answered. The wording "parallelly forward an incoming call on an outside line to a plurality of recipients" is directed to a wide concept including not only a case where the incoming call is simultaneously forwarded to the plurality of recipients but also a case where the times starting the call forwarding deviate from each other but forwarding times (times for calling the recipients) overlap each other.

As hereinabove described, the private branch exchange according to the aspect of the present invention is provided with the control portion parallelly forwarding the incoming call on the outside line to the plurality of recipients through one or more of the first telephone communication portion, the second telephone communication portion and the third telephone communication portion if the incoming call on the outside line is not answered, whereby the incoming call on the outside line can be forwarded to the plurality of recipients in a shorter time if the same is not answered, as compared with a case of successively forwarding the unanswered incoming call on the outside line one by one to the plurality of recipients. Consequently, an answerer can be found in a shorter time.

In the aforementioned private branch exchange according to the aspect, the first telephone communication portion preferably includes an analog telephone communication portion connected to an analog telephone network as the first telephone network, the second telephone communication portion preferably includes a portable telephone communication portion connected to a portable telephone network as the second telephone network, the third telephone communication portion preferably includes an IP network communication portion connected to an IP network as the third telephone network, and the control portion is preferably formed to parallelly forward the incoming call on the outside line to the plurality of recipients through one or more of the analog telephone communication portion, the portable telephone communication portion and the IP network communication portion if the incoming call on the outside line is not answered. According to this structure, the control portion can parallelly forward the incoming call to the plurality of recipients including an analog telephone terminal corresponding to analog telephone communication, a portable telephone terminal corresponding to portable telephone communication and an IP telephone terminal corresponding to IP network communication.

In this case, the private branch exchange preferably further includes an extension communication portion connected to an extension telephone terminal, and the control portion is preferably formed to parallelly forward the incoming call on the outside line to the plurality of recipients through one or more of the analog telephone communication portion, the portable telephone communication portion and the IP network communication portion if the extension telephone terminal does not answer the incoming call on the outside line. According to this structure, the control portion first calls the extension telephone terminal when receiving the incoming call on the outside line and then forwards the incoming call only when the extension telephone terminal does not answer the incoming call, whereby unnecessary call forwarding can be prevented when a person capable of answering the incoming call is present within the private branch (within the extension range).

In the aforementioned structure including the extension communication portion, the plurality of recipients preferably include a recipient on the IP network, and the control portion is preferably formed to parallelly forward the incoming call on the outside line to the plurality of recipients at least through the IP network communication portion if the extension telephone terminal does not answer the incoming call on the outside line. According to this structure, the control portion can easily parallelly forward the incoming call to the plurality of recipients through the IP network communication portion capable of parallelly performing a plurality of communication operations so that no communication line is monopolized by one communication operation dissimilarly to the analog telephone communication portion and the portable telephone communication portion.

In the aforementioned structure having the plurality of recipients including the recipient on the IP network, the control portion is preferably formed to parallelly forward the incoming call on the outside line to a plurality of recipients on the IP network at least through the IP network communication portion if the extension telephone terminal does not answer the incoming call on the outside line. According to this structure, the control portion can parallelly forward the incoming call to a larger number of recipients as compared with a case of forwarding the same to only one recipient on the IP network, whereby the possibility of finding an answerer in a shorter time can be improved.

In the aforementioned structure including the extension communication portion, the control portion is preferably formed to parallelly forward an incoming call received from the analog telephone network or the portable telephone network to a recipient on the portable telephone network or a recipient on the analog telephone network and a recipient on the IP network through the portable telephone communication portion or the analog telephone communication and the IP network communication portion if the extension telephone terminal does not answer the incoming call received from the analog telephone network or the portable telephone network. According to this structure, the control portion can reliably parallelly forward the incoming call to a plurality of recipients through the unmonopolized portable telephone communication portion or the unmonopolized analog telephone communication portion and the IP network communication if the incoming call received from the analog telephone network or the portable telephone network monopolizes a line of the analog telephone communication portion or the portable telephone communication portion.

In the aforementioned structure including the extension communication portion, the control portion is preferably formed to parallelly forward an incoming call received from the IP network to a recipient on the analog telephone network, a recipient on the portable telephone network and a recipient on the IP network through the analog telephone communication portion, the portable telephone communication portion and the IP network communication portion if the extension telephone terminal does not answer the incoming call received from the IP network. According to this structure, the incoming call received from the IP network monopolizes none of the analog telephone communication portion, the portable telephone communication portion and the IP network communication portion, whereby the control portion can parallelly forward the incoming call to a larger number of recipients by parallelly forwarding the same to recipients on the analog telephone communication network, the portable telephone communication network and the IP network. Consequently, the possibility of finding an answerer in a shorter time can be improved.

In the aforementioned structure having the plurality of recipients including the recipient on the IP network, the control portion is preferably formed to start parallelly forwarding the incoming call on the outside line to a plurality of recipients on the IP network through the IP network communication portion and to thereafter forward the incoming call on the outside line through one or both of the analog telephone communication portion and the portable telephone communication portion in parallel with the call forwarding to the plurality of recipients on the IP network if the extension telephone terminal does not answer the incoming call on the outside line. According to this structure, the control portion starts the call forwarding through the IP network communication portion capable of parallelly forwarding the incoming call to a plurality of recipients in advance of the call forwarding through the analog telephone communication portion and the portable telephone communication portion, whereby the incoming call can be more quickly parallelly forwarded to the plurality of recipients.

In the aforementioned structure including the extension communication portion, the private branch exchange preferably further includes a storage portion storing a recipient information table including information on telephone numbers of recipients, and the control portion is preferably formed to parallelly forward the incoming call on the outside line to a plurality of recipients on the basis of the recipient information table if the extension telephone terminal does not answer the incoming call on the outside line. According to this structure, the control portion can easily acquire the telephone numbers of the recipients from the recipient information table, whereby the same can easily parallelly forward the incoming call to the plurality of recipients.

In the aforementioned structure including the storage portion, the recipient information table preferably further includes information on a calling time for the recipients in addition to the information on the telephone numbers of the recipients, and the control portion is preferably formed to parallelly forward the incoming call on the outside line to a plurality of recipients on the basis of the recipient information table if the extension telephone terminal does not answer the incoming call on the outside line, then to stop the current call forwarding when a prescribed calling time elapses and to substitutionally forward the incoming call to the next recipient according to the information on the calling time. According to this structure, the control portion is prevented from continuously calling the same unanswering recipient so that the same can forward the incoming call to the next recipient, whereby the possibility of finding an answerer in a shorter time can be improved.

In the aforementioned structure having the recipient information table including the information on the calling time for the recipients, the recipient information table is preferably formed to be capable of individually setting the information on the calling time every recipient, and the control portion is preferably formed to stop the call forwarding when the calling time has elapsed and to substitutionally forward the incoming call on the outside line to the next recipient according to the information on the calling time individually set every recipient. According to this structure, the control portion can call (ring) the recipients with different calling times respectively, whereby the possibility of finding an answerer in a short time can be improved by lengthening the calling time (ringing time) for a recipient having a high possibility of answering the incoming call, for example.

In the aforementioned structure including the storage portion, the recipient information table preferably further includes information on call forwarding order in addition to the information on the telephone numbers of the recipients, and the control portion is formed to parallelly forward the incoming call on the outside line to the plurality of recipients in order responsive to the information on the call forwarding order on the basis of the recipient information table if the extension telephone terminal does not answer the incoming call on the outside line. According to this structure, the control portion can forward the incoming call to the recipients in order of the possibility of answering the incoming call, whereby the possibility of finding an answerer in a short time can be improved.

In the aforementioned structure having the recipient information table including the information on the call forwarding order, the control portion is preferably formed to successively repeat the call forwarding according to the information on the call forwarding order on the basis of the recipient information table until any of the plurality of recipients answers the incoming call on the outside line if the extension telephone terminal does not answer the incoming call on the outside line. According to this structure, the control portion repeats the call forwarding to any recipient to which the same has already forwarded the incoming call if the remaining recipients do not answer the incoming call, whereby the possibility of finding an answerer can be more improved.

In the aforementioned structure having the recipient information table including the information on the call forwarding order, the recipient information table preferably includes information on call forwarding order as to recipients on the analog telephone network and information on call forwarding order as to recipients on the portable telephone network, while including no information on call forwarding order as to recipients on the IP network. According to this structure, the storage portion may not store unnecessary information (information on call forwarding order) as to the recipients on the IP network to which the control portion can parallelly forward the incoming call, whereby the burden on the storage portion can be reduced.

In the aforementioned private branch exchange according to the aspect, the control portion is preferably formed to stop the call forwarding to the remaining recipients if any of the plurality of recipients answers the incoming call on the outside line. According to this structure, the control portion can be prevented from continuously performing the call forwarding to the remaining recipients if the same finds an answerer.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram showing the overall structure of an IP-PBX according to an embodiment of the present invention;
Fig. 2 is illustrates a recipient information table of the IP-PBX according to the embodiment of the present invention;
Fig. 3 is a flow chart for illustrating processing in a case of receiving an incoming call on an outside line in the IP-PBX according to the embodiment of the present invention; and
Fig. 4 is a flow chart for illustrating processing for forwarding the incoming call to a recipient on an IP network in the IP-PBX according to the embodiment of the present invention.

### DESCRIPTION OF THE PREFERRED EMBODIMENTS

An embodiment of the present invention is now described with reference to the drawings.

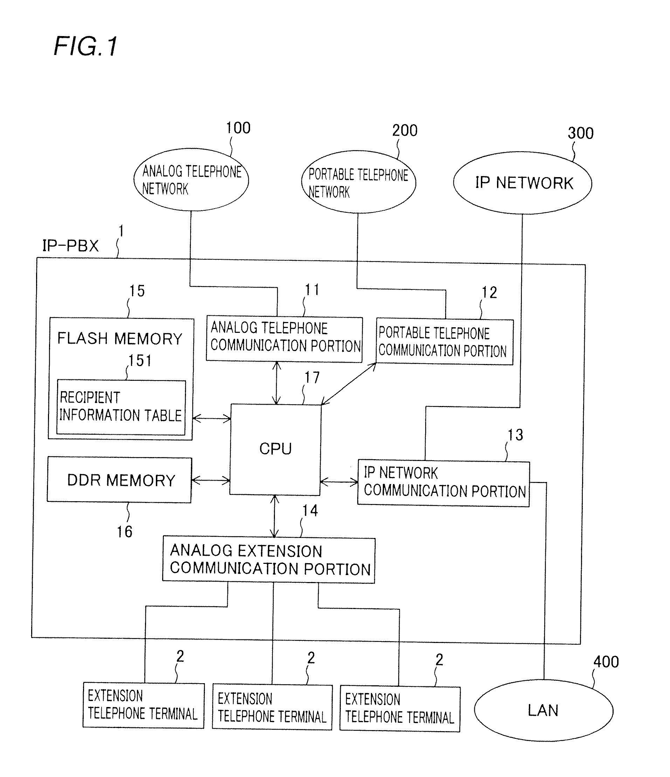

First, the structure of an IP-PBX (Internet Protocol-Private Branch exchange) 1 according to the embodiment of the present invention is described with reference to Fig. 1. In this embodiment, the private branch exchange according to the present invention is applied to the IP-PBX 1.

The IP-PBX 1 according to the embodiment of the present invention has a function of relaying between outside lines and extensions. More specifically, the IP-PBX 1 has a function of putting through incoming calls from public telephone networks (an analog telephone network 100, a portable telephone network 200, an IP network 300 and the like) to extension telephone terminals 2 in a hospital, a company or the like. The IP-PBX 1 also has a function of putting through calls from the extension telephone terminals 2 in the hospital, the company or the like to terminals on the public telephone networks. The IP-PBX 1 further has a function of connecting the extension telephone terminals 2 in the hospital, the company or the like with each other to enable conversation over the extension telephone terminals 2. The IP-PBX 1 further has a function of forwarding incoming calls from the public telephone networks to recipients on the public telephone networks if the incoming calls are not answered, as described later. The IP-PBX 1 further has a call park function of parking a call put through to any extension telephone terminal 2 and thereafter putting through the call to another extension telephone terminal 2.

More specifically, the IP-PBX 1 further includes an analog telephone communication portion 11, a portable telephone communication portion 12, an IP network communication portion 13 and an analog extension communication portion 14. The IP-PBX 1 further includes a flash memory 15, a DDR (Double Data Rate) memory 16 and a CPU 17. The analog telephone communication portion 11 is an example of the "first telephone communication portion" in the present invention, and the portable telephone communication portion 12 is an example of the "second telephone communication portion" in the present invention. The IP network communication portion 13 is an example of the "third telephone communication portion" in the present invention, and the analog extension communication portion 14 is an example of the "extension communication portion" in the present invention.

The analog telephone communication portion 11 is connected to the analog telephone network 100, and formed to allow analog telephone communication over one line (the user is under contract with a telephone company for only one line as to the analog telephone communication). The portable telephone communication portion 12 is connected to the portable telephone network 200, and formed to allow portable telephone communication over one line (the user is under contract with the telephone company for only one line as to the portable telephone communication). The analog telephone network 100 is an example of the "first telephone network" in the present invention, and the portable telephone network 200 is an example of the "second telephone network" in the present invention. The IP network communication portion 13 is connected to the IP network 300, and allows parallel communication with a plurality of terminal units on the IP network 300. The IP network 300 is an example of the "third telephone network" in the present invention. A LAN (Local Area Network) 400 constructed in the hospital, the company or the like is connected to the IP network communication portion 13. The IP network communication portion 13 has a function of connecting terminal units on the public telephone networks (the analog telephone network 100, the portable telephone network 200, the IP network 300 and the like) and those on the LAN 400 with each other, to allow communication therebetween. The analog extension communication portion 14 is associated with analog telephone communication, and connected to the plurality of extension telephone terminals 2 associated with the analog telephone communication. The analog extension communication portion 14 has a function of connecting terminal units on the public telephone networks (the analog telephone network 100, the portable telephone network 200, the IP network 300 and the like) and the extension telephone terminals 2 with each other, to allow communication therebetween.

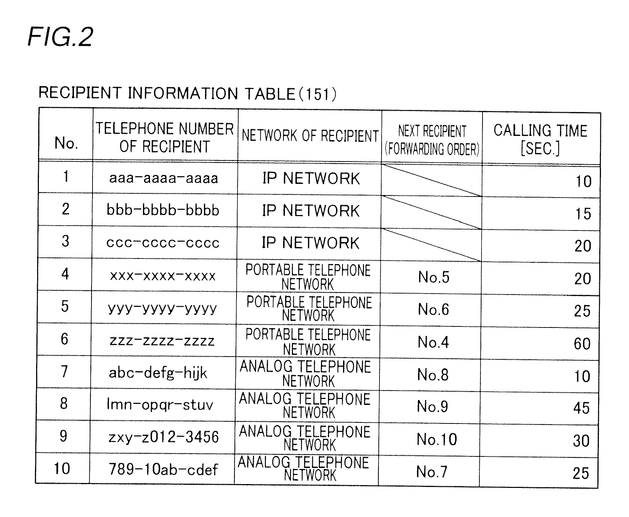

The flash memory 15, formed by a rewritable nonvolatile memory, stores a recipient information table 151 including information related to recipients. The recipient information table 151 includes information about the telephone numbers of the recipients, recipient network information indicating the communication networks to which the recipients belong, call forwarding order information indicating the order of forwarding incoming calls and calling time information indicating the times for calling the recipients, as shown in Fig. 2. The user can change the contents of the recipient information table 151 with a PC (Personal Computer: not shown) connected to the LAN 400. In other words, the user can add information about new recipients to the recipient information table 151 and change the call forwarding order and/or the calling times. The calling time information in the recipient information table 151 is so formed that a different calling time (ringing time) can be individually set every recipient. The call forwarding order information in the recipient information table 151 includes only call forwarding order information as to recipients on the analog telephone network 100 and call forwarding order information as to recipients on the portable telephone network 200, while including no call forwarding order information as to recipients on the IP network 300. This is because the IP-PBX 1 can parallelly forward any incoming call to a plurality of recipients on the IP network 300 through the IP network communication portion 13. The flash memory 15 is an example of the "storage portion" in the present invention.

According to this embodiment, the CPU 17 is connected to the respective portions of the IP-PBX 1, and formed to control these portions. Further, the CPI 17 is formed to parallelly forward any incoming call on an outside line to a plurality of recipients if the corresponding extension telephone terminal 2 does not answer the incoming call. More specifically, the CPU 17 is formed to forward an incoming call received from the analog telephone network 100 to the corresponding recipient on the portable telephone network 200 through the portable telephone communication portion 12 while also forwarding the incoming call to a plurality of recipients on the IP network 300 through the IP network communication portion 13 in parallel therewith if the corresponding extension telephone terminal 2 does not answer the incoming call. The CPU 17 is formed to forward an incoming call received from the portable telephone network 200 to the corresponding recipient on the analog telephone network 100 through the analog telephone communication portion 11 while also forwarding the incoming call to a plurality of recipients on the IP network 300 through the IP network communication portion 13 in parallel therewith if the corresponding extension telephone terminal 2 does not answer the incoming call. Further, the CPU 17 is formed to parallelly forward an incoming call received from the IP network 300 to the corresponding recipient on the analog telephone network 100, the corresponding recipient on the portable telephone network 200 and a plurality of recipients on the IP network 300 if the corresponding extension telephone terminal 2 does not answer the incoming call. The CPU 17 is an example of the "control portion" in the present invention.

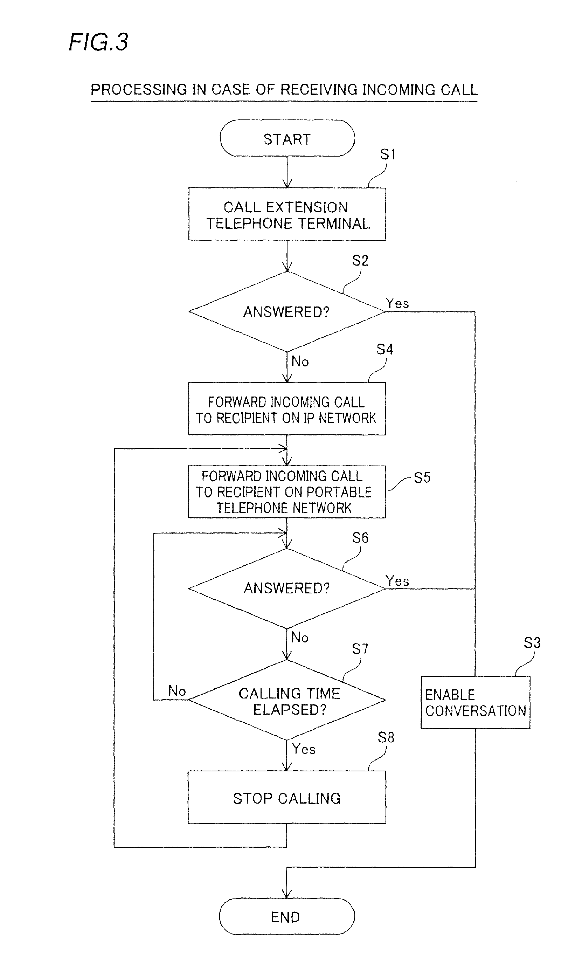

Processing performed by the CPU 17 of the IP-PBX 1 according to the embodiment of the present invention in a case of receiving an incoming call is now described with reference to Fig. 3. In the following description, it is assumed that the CPU 17 receives an incoming call from the analog telephone network 100, as an example of the case of receiving an incoming call. The CPU 17 of the IP-PBX 1 starts the processing in the case of receiving an incoming call when receiving an incoming call from any of the public telephone networks (the analog telephone network 100, the portable telephone network 200, the IP network 300 and the like).

First, the CPU 17 calls the plurality of extension telephone terminals 2 through the analog extension communication portion 14 at a step S1 shown in Fig. 3. If any of the terminal units on the LAN 400 is employed as an extension telephone terminal, the CPU 17 also calls this terminal unit. At a step S2, the CPU 17 determines whether or not the incoming call is answered (whether or not any of the extension telephone terminals 2 is taken off the hook). If the incoming call is answered by any of the extension telephone terminals 2 (or the terminal unit on the LAN 400), the CPU 17 enables conversation over the answering extension telephone terminal 2 (or the terminal unit on the LAN 400) through the analog extension communication portion 14 (or the IP network communication portion 13) at a step S3. At this time, the CPU 17 stops calling (ringing) the extension telephone terminals 2 other than the answering extension telephone terminal 2 (or the terminal unit on the LAN 400).

If the incoming call is not answered after calling the extension telephone terminals 2 (and the terminal unit on the LAN 400) for a prescribed time (about 20 seconds, for example), on the other hand, the CPU 17 forwards the incoming call to recipients on the IP network 300 at a step S4. More specifically, the CPU 17 parallelly forwards the incoming call to the plurality of recipients (recipients Nos. 1 to 3) on the IP network 300 registered in the recipient information table 151, on the basis of the recipient information table 151 shown in Fig. 2.

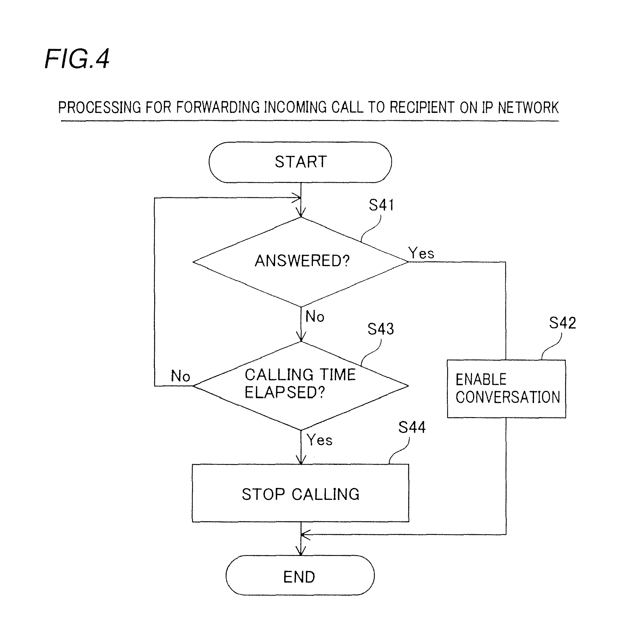

When starting forwarding the incoming call to the recipients on the IP network 300, the CPU 17 executes processing shown in Fig. 4 every recipient. In other words, the CPU 17 executes the processing shown in Fig. 4 for the respective ones of the plurality of recipients (recipients Nos. 1 to 3) independently of each other.

The processing executed by the CPU 17 of the IP-PBX 1 according to the embodiment of the present invention for forwarding the incoming call to each of the recipients on the IP network 300 is described with reference to Fig. 4.

At a step S41, the CPU 17 determines whether or not the incoming call is answered by the corresponding recipient on the IP network 300 (whether or not the telephone of the recipient is taken off the hook). If the incoming call is answered by the recipient on the IP network 300, the CPU 17 enables conversation over the telephone of the answering recipient (recipient No. 1, 2 or 3) through the IP network communication portion 13 at a step S42. At this time, the CPU 17 stops calling (ringing) the recipients other than the answering recipient (recipient No. 1, 2 or 3) and terminates the processing for forwarding the incoming call to the recipients on the IP network 300. If the incoming call is answered by the recipient (No. 1, 2 or 3), further, the CPU 17 also stops an operation of calling (ringing) the corresponding recipient on the portable telephone network 200, described later, performed in parallel with the processing for forwarding the incoming call to the recipients on the IP network 300 shown in Fig. 4.

If the incoming call is not answered, on the other hand, the CPU 17 determines whether or not a set calling time (10 seconds for the recipient No. 1, for example) has elapsed on the basis of the calling time information in the recipient information table 151, and returns to the step S41 if the calling time has not elapsed. When the calling time elapses (time-out), the CPU 17 stops calling (ringing) the recipient at a step S44.

After starting forwarding the incoming call to the recipients on the IP network 300, the CPU 17 forwards the incoming call to the corresponding recipient on the portable telephone network 200 at a step S5 in Fig. 3, in parallel with the processing for forwarding the incoming call to the recipients on the IP network 300 shown in Fig. 4. More specifically, the CPU 17 forwards the incoming call to the recipient (recipient No. 4 in the case of Fig. 2) having the smallest registration number among the registered recipients on the portable telephone network 200, on the basis of the recipient information table 151. According to this embodiment, the user of the IP-PBX 1 is under contract with the telephone company for only one line as to the portable telephone communication, and hence the CPU 17 cannot parallelly forward the incoming call to a plurality of recipients on the portable telephone network 200.

Thereafter the CPU 17 determines whether or not the recipient answers the incoming call, and enables conversation over the telephone of the answering recipient on the portable telephone network 200 through the portable telephone communication portion 12 at a step S3 if the recipient answers the incoming call. At this time, the CPU 17 stops the aforementioned processing for forwarding the incoming call to the recipients (recipients Nos. 1 to 3) on the IP network 300 performed in parallel with the operation for forwarding the incoming call to the recipient on the portable telephone network 200, and terminates the processing for forwarding the incoming call to the recipients on the IP network 300 shown in Fig. 4.

If the recipient does not answer the incoming call, on the other hand, the CPU 17 determines whether or not a set calling time (20 seconds for the recipient No. 4, for example) has elapsed on the basis of the calling time information in the recipient information table 151 at a step S7, and returns to a step S6 if the calling time has not elapsed. When the calling time elapses (time-out), the CPU 17 stops calling (ringing) the recipient at a step S8 and returns to the step S5, to forward the incoming call to the next recipient (recipient No. 5 subsequent to the recipient No. 4 in the case of Fig. 2) on the basis of the call forwarding order information in the recipient information table 151. Thereafter the CPU 17 successively repeats the call forwarding to the recipients No. 5, No. 6, No. 4, No. 5, ..., until any recipient (any of the recipients on the portable telephone network 200 and those on the IP network 300) answers the incoming call.

While the processing in the case of receiving the incoming call from the analog telephone network 100 has been described with reference to Figs. 3 and 4, the CPU 17 forwards an incoming call received from the portable telephone network 200 to a recipient on the analog telephone network 100 in place of the recipient on the portable telephone line 200 at the steps S5 to S8 shown in Fig. 3. In other words, the CPU 17 successively repeats call forwarding to the recipients Nos. 7 to 10 until any recipient (any of the recipients on the analog telephone network 100 and those on the IP network 300) answers the incoming call in the case of the recipient information table 151 shown in Fig. 2. The remaining operations are similar to those in the aforementioned case of receiving the incoming call from the analog telephone network 100.

When receiving an incoming call from the IP network 300, the CPU 17 separately performs the operations at the steps S5 to S8 shown in Fig. 3 as to both of a recipient on the analog telephone network 100 and that on the portable telephone network 200. That is, the CPU 17 forwards the incoming call to any recipient (recipient No. 7 in the case of Fig. 2) on the analog telephone network 100 and any recipient (recipient No. 4 in the case of Fig. 2) on the portable telephone network 200 in parallel with the processing for forwarding the incoming call to the recipients on the IP network 300 shown in Fig. 4. In other words, the CPU 17 parallelly forwards the incoming call to the recipient on the analog telephone network 100, that on the portable telephone network 200 and those on the IP network 300. Referring to the recipient information table 151 shown in Fig. 2, the CPU 17 successively repeats the call forwarding to the recipients Nos. 7 to 10 on the analog telephone network 100 while successively repeating the call forwarding to the recipients Nos. 4 to 6 on the portable telephone network 200 in parallel therewith, until any recipient (any of the recipients on the analog telephone network 100, those on the portable telephone network 200 and those on the IP network 300) answers the incoming call. The remaining operations are similar to those in the aforementioned case of receiving the incoming call from the analog telephone network 100.

According to this embodiment, as hereinabove described, the IP-PBX 1 is provided with the CPU 17 parallelly forwarding an incoming call on an outside line to a plurality of recipients through any of the analog telephone communication portion 11, the portable telephone communication portion 12 and the IP network communication portion 13 if the incoming call is not answered, whereby the incoming call can be forwarded to the plurality of recipients in a shorter time as compared with a case of successively forwarding the unanswered incoming call one by one to the plurality of recipients. Consequently, an answerer can be found in a shorter time. Further, the CPU 17 is formed to parallelly forward the incoming call to the plurality of recipients through the analog telephone communication portion 11, the portable telephone communication portion 12 and the IP network communication portion 13, whereby the incoming call can be forwarded to the plurality of recipients including an analog telephone terminal corresponding to analog telephone communication, a portable telephone terminal corresponding to portable telephone communication and an IP telephone terminal corresponding to IP network communication. In addition, the CPU 17 is formed to forward the incoming call to the plurality of recipients when the incoming call is answered by none of the extension telephone terminals 2 so that the same first calls the extension telephone terminals 2 and then forwards the incoming call only when none of the extension telephone terminals 2 answers the incoming call, whereby unnecessary call forwarding can be prevented when a person capable of answering the incoming call is present within the private branch (within the extension range).

According to this embodiment, the CPU 17 is formed to parallelly forward an incoming call on an outside line to a plurality of recipients including those on the IP network 300 at least through the IP network communication portion 13 if none of the extension telephone terminals 2 answers the incoming call. Thus, the CPU 17 can easily parallelly forward the incoming call to the plurality of recipients through the IP network communication portion 13 capable of parallelly forwarding the incoming call to a plurality of recipients to the analog telephone communication portion 11 and the portable telephone communication portion 12.

According to this embodiment, the CPU 17 is formed to parallelly forward an incoming call on an outside line to a plurality of recipients on the IP network 300 at least through the IP network communication portion 13 if none of the extension telephone terminals 2 answers the incoming call. Thus, the CPU 17 can parallelly forward the incoming call to a larger number of recipients as compared with a case of forwarding the same to only one recipient on the IP network 300, whereby the possibility of finding an answerer in a shorter time can be improved.

According to this embodiment, the CPU 17 is formed to parallelly forward an incoming call received from the analog telephone network 100 (portable telephone network 200) to a recipient on the portable telephone network 200 (analog telephone network 100) and those on the IP network 300 through the portable telephone communication portion 12 (analog telephone communication portion 11) and the IP network communication portion 13 if none of the extension telephone terminals 2 answers the incoming call. Even if the incoming call received from the analog telephone network 100 (portable telephone network 200) monopolizes a line of the analog telephone communication portion 11 (portable telephone communication portion 12), therefore, the CPU 17 can reliably parallelly forward the incoming call to a plurality of recipients through the unmonopolized portable telephone communication portion 12 (analog telephone communication 11) and the IP network communication portion 13.

According to this embodiment, the CPU 17 is formed to parallelly forward an incoming call received from the IP network 300 to a recipient on the analog telephone network 100, that on the portable telephone network 200 and those on the IP network 300 through the analog telephone communication portion 11, the portable telephone communication portion 12 and the IP network communication portion 13 if none of the extension telephone terminals 2 answers the incoming call. Thus, the incoming call received from the IP network 300 monopolizes none of the analog telephone communication portion 11, the portable telephone communication portion 12 and the IP network communication portion 13, whereby the CPU 17 can parallelly forward the incoming call to a larger number of recipients by parallelly forwarding the same to the recipient on the analog telephone network 100, that on the portable telephone network 200 and those on the IP network 300. Consequently, the possibility of finding an answerer in a shorter time can be improved.

According to this embodiment, the CPU 17 is formed to start parallelly forwarding an incoming call on an outside line to a plurality of recipients on the IP network 300 and to thereafter forward the incoming call through one or both of the analog telephone communication portion 11 and the portable telephone communication portion 12 in parallel with the call forwarding to the plurality of recipients on the IP network 300 if none of the extension telephone terminals 2 answers the incoming call. Thus, the CPU 17 starts the call forwarding through the IP network communication portion 13 capable of parallelly forwarding the incoming call to a plurality of recipients in advance of the call forwarding through the analog telephone communication portion 11 and the portable telephone communication portion 12, whereby the incoming call can be more quickly parallelly forwarded to the plurality of recipients.

According to this embodiment, the CPU 17 is formed to parallelly forward an incoming call on an outside line to a plurality of recipients on the basis of the recipient information table 151, then to stop the current call forwarding when the prescribed calling time elapses and to substitutionally forward the incoming call to the next recipient according to the information on the calling times if none of the extension telephone terminals 2 answers the incoming call. Thus, the CPU 17 is prevented from continuously calling the same unanswering recipient so that the same can forward the incoming call to the next recipient, whereby the possibility of finding an answerer in a shorter time can be improved.

According to this embodiment, the CPU 17 is formed to individually stop call forwarding when the prescribed calling time elapses and to substitutionally forward the incoming call to the next recipient according to the information on the calling times individually set for the respective recipients. Thus, the CPU 17 can call (ring) the recipients with different calling times respectively, whereby the possibility of finding an answerer in a short time can be improved by lengthening the calling time (ringing time) for a recipient having a high possibility of answering the incoming call, for example.

According to this embodiment, the CPU 17 is formed to parallelly forward an incoming call on an outside line to a plurality of recipients in order responsive to the information on the call forwarding order on the basis of the recipient information table 151 if none of the extension telephone terminals 2 answers the incoming call. Thus, the CPU 17 can forward the incoming call to the recipients in order of the possibility of answering the incoming call, whereby the possibility of finding an answerer in a short time can be improved.

According to this embodiment, the CPU 17 is formed to successively repeat call forwarding according to the information on the call forwarding order until any of the plurality of recipients answers an incoming call on an outside line, if none of the extension telephone terminals 2 answers the incoming call. Thus, the CPU 17 repeats the call forwarding to any recipient to which the same has already forwarded the incoming call if the remaining recipients do not answer the incoming call, whereby the possibility of finding an answerer can be more improved.

According to this embodiment, the CPU 17 is formed to stop forwarding an incoming call to the remaining recipients if any of a plurality of recipients answers the incoming call. Thus, the CPU 17 is prevented from continuing unnecessary call forwarding to the remaining recipients although an answerer has been found.

Although the present invention has been described and illustrated in detail, it is clearly understood that the same is by way of illustration and example only and is not to be taken by way of limitation, the spirit and scope of the present invention being limited only by the terms of the appended claims.

For example, while the IP-PBX is employed as an example of the private branch exchange in the aforementioned embodiment, the present invention is not restricted to this. The present invention is also applicable to a private branch exchange other than the IP-PBX.

While the IP-PBX includes the analog telephone communication portion as the first telephone communication portion, the portable telephone communication portion as the second telephone communication portion and the IP network communication portion as the third telephone communication portion in the aforementioned embodiment, the present invention is not restricted to this. According to the present invention, the IP-PBX may alternatively include a PHS (Personal Handyphone System) telephone communication portion connected to a PHS telephone network, for example, in place of any of the aforementioned three types of communication portions.

While the CPU is formed to forward an incoming call to a plurality of recipients if none of the extension telephone terminals answers the incoming call in the aforementioned embodiment, the present invention is not restricted to this. According to the present invention, the CPU may alternatively be formed to forward an incoming call to a plurality of recipients when a terminal, such as a telephone terminal storing the function of the private branch exchange according to the present invention, for example, other than the extension telephone terminals does not answer the incoming call.

While the CPU is formed to parallelly forward an incoming call received from the analog telephone network to a recipient on the portable telephone network and those on the IP network, to parallelly forward an incoming call received from the portable telephone network to a recipient on the analog telephone network and those on the IP network and to parallelly forward an incoming call received from the IP network to a recipient on the analog telephone network, that on the portable telephone network and those on the IP network in the aforementioned embodiment, the present invention is not restricted to this. According to the present invention, the CPU may alternatively formed to parallelly forward an incoming call received from any of the telephone networks only to a plurality of recipients on the IP network.

While the CPU is formed to parallelly forward an incoming call received from any telephone network to a plurality of recipients on the IP network in the aforementioned embodiment, the present invention is not restricted to this. According to the present invention, the CPU may alternatively forward an incoming call to only one recipient on the IP network if the same can parallelly forward the incoming call to a plurality of recipients on the analog telephone network, the portable telephone network and the IP network in a combined manner.

While the analog extension communication portion is employed as an example of the extension communication portion in the aforementioned embodiment, the present invention is not restricted to this. According to the present invention, an extension communication portion corresponding to a portable telephone terminal or a PHS communication terminal employed as an extension terminal may alternatively be employed.

## Claims

1. A private branch exchange (1) comprising:
a first telephone communication portion (11) connected to a first telephone network (100);
a second telephone communication portion (12) connected to a second telephone network (200);
a third telephone communication portion (13) connected to a third telephone network (300); and
a control portion (17) parallelly forwarding an incoming call on an outside line to a plurality of recipients through one or more of said first telephone communication portion, said second telephone communication portion and said third telephone communication portion if said incoming call is not answered.

2. The private branch exchange according to claim 1,
wherein
said first telephone communication portion includes an analog telephone communication portion (11) connected to an analog telephone network (100) as said first telephone network,
said second telephone communication portion includes a portable telephone communication portion (12) connected to a portable telephone network (200) as said second telephone network,
said third telephone communication portion includes an IP network communication portion (13) connected to an IP network (300) as said third telephone network, and
said control portion is formed to parallelly forward said incoming call on said outside line to said plurality of recipients through one or more of said analog telephone communication portion, said portable telephone communication portion and said IP network communication portion if said incoming call on said outside line is not answered.

3. The private branch exchange according to claim 2, further comprising an extension communication portion (14) connected to an extension telephone terminal, wherein
said control portion is formed to parallelly forward said incoming call on said outside line to said plurality of recipients through one or more of said analog telephone communication portion, said portable telephone communication portion and said IP network communication portion if said extension telephone terminal does not answer said incoming call on said outside line.

4. The private branch exchange according to claim 3,
wherein
said plurality of recipients include a recipient on said IP network, and
said control portion is formed to parallelly forward said incoming call on said outside line to said plurality of recipients at least through said IP network communication portion if said extension telephone terminal does not answer said incoming call on said outside line.

5. The private branch exchange according to claim 3,
wherein
said control portion is formed to parallelly forward said incoming call on said outside line to a plurality of recipients on said IP network at least through said IP network communication portion if said extension telephone terminal does not answer said incoming call on said outside line.

6. The private branch exchange according to claim 4,
wherein
said control portion is formed to parallelly forward an incoming call received from said analog telephone network or said portable telephone network to a recipient on said portable telephone network or a recipient on said analog telephone network and a recipient on said IP network through said portable telephone communication portion or said analog telephone communication portion and said IP network communication portion if said extension telephone terminal does not answer said incoming call from said analog telephone network or said potable telephone network.

7. The private branch exchange according to claim 3,
wherein
said control portion is formed to parallelly forward an incoming call received from said IP network to a recipient on said analog telephone network, a recipient on said portable telephone network and a recipient on said IP network through said analog telephone communication portion, said portable telephone communication portion and said IP network communication portion if said extension telephone terminal does not answer said incoming call received from said IP network.

8. The private branch exchange according to claim 4,
wherein
said control portion is formed to start parallelly forwarding said incoming call on said outside line to a plurality of recipients on said IP network through said IP network communication portion and to thereafter forward said incoming call on said outside line through one or both of said analog telephone communication portion and said portable telephone communication portion in parallel with the call forwarding to said plurality of recipients on said IP network if said extension telephone terminal does not answer said incoming call on said outside line.

9. The private branch exchange according to claim 3, further comprising a storage portion (15) storing a recipient information table (151) including information on telephone numbers of recipients, wherein
said control portion is formed to parallelly forward said incoming call on said outside line to a plurality of recipients on the basis of said recipient information table if said extension telephone terminal does not answer said incoming call on said outside line.

10. The private branch exchange according to claim 9,
wherein
said recipient information table further includes information on a calling time for said recipients in addition to said information on said telephone numbers of said recipients, and
said control portion is formed to parallelly forward said incoming call on said outside line to a plurality of recipients on the basis of said recipient information table if said extension telephone terminal does not answer said incoming call on said outside line, then to stop the current call forwarding when prescribed said calling time elapses and to substitutionally forward said incoming call to next said recipient according to said information on said calling time.

11. The private branch exchange according to claim 10,
wherein
said recipient information table is formed to be capable of individually setting said information on said calling time every said recipient, and
said control portion is formed to stop the current call forwarding when said prescribed time elapses and to substitutionally forward said incoming call to next said recipient according to said information on said calling time individually set every said recipient.

12. The private branch exchange according to claim 9,
wherein
said recipient information table further includes information on call forwarding order in addition to said information on said telephone numbers of said recipients, and
said control portion is formed to parallelly forward said incoming call on said outside line to said plurality of recipients in order responsive to said information on said call forwarding order on the basis of said recipient information table if said extension telephone terminal does not answer said incoming call on said outside line.

13. The private branch exchange according to claim 12,
wherein
said control portion is formed to successively repeat the call forwarding according to said information on said call forwarding order on the basis of said recipient information table until any of said plurality of recipients answers said incoming call on said outside line if said extension telephone terminal does not answer said incoming call on said outside line.

14. The private branch exchange according to claim 12,
wherein
said recipient information table includes information on call forwarding order as to recipients on said analog telephone network and information on call forwarding order as to recipients on said portable telephone network, while including no information on call forwarding order as to recipients on said IP network.

15. The private branch exchange according to claim 1,
wherein
said control portion is formed to stop the call forwarding to remaining said recipients if any of said plurality of recipients answers said incoming call.
